(19) **Europäisches Patentamt / European Patent Office / Office européen des brevets**

(11) **EP 1 420 469 B1**

(12) **EUROPEAN PATENT SPECIFICATION**

(45) Date of publication and mention of the grant of the patent:
**13.11.2013 Bulletin 2013/46**

(21) Application number: **02762776.9**

(22) Date of filing: **14.08.2002**

(51) Int Cl.:
*H01M 2/16* *(2006.01)*    *H01M 10/052* *(2010.01)*

(86) International application number:
**PCT/JP2002/008272**

(87) International publication number:
**WO 2003/017393 (27.02.2003 Gazette 2003/09)**

(54) **CELL**

ZELLE

PILE

(84) Designated Contracting States:
**DE FR GB**

(30) Priority: **20.08.2001   JP 2001249581**

(43) Date of publication of application:
**19.05.2004   Bulletin 2004/21**

(73) Proprietor: **Sony Corporation
Tokyo 108-0075 (JP)**

(72) Inventors:
• **UJIIE, Yasuharu,
c/o Sony Corporation
Tokyo 108-0075 (JP)**

• **SHIBUYA, Mashio,
c/o Sony Corporation
Tokyo 108-0075 (JP)**

(74) Representative: **Müller - Hoffmann & Partner
Patentanwälte
Innere Wiener Strasse 17
81667 München (DE)**

(56) References cited:
**JP-A- 5 205 721        JP-A- 7 105 928
JP-A- 11 260 405        JP-A- 2000 072 908
JP-A- 2000 268 867      JP-A- 2001 243 988
JP-A- 2002 184 466      JP-A- 2002 203 533
JP-A- 2002 203 602      US-A- 4 190 707
US-A- 5 667 911**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a battery comprising a positive electrode and a negative electrode which are placed to face each other, and an electrolyte and a separator which are located therebetween.

BACKGROUND ART

In recent years, compact electrical apparatuses, typically represented by portable telephones, video cameras, portable AV equipment, laptop computers, and the like, have constantly been accepted by the masses, and miniaturization, weight saving, and high efficiency of these apparatuses have more strongly been required. In this connection, requirements for batteries for electronics devices have also been diversified, and especially a discharge load characteristic and a low temperature discharge characteristic have very strongly been required. In order to improve these discharge load characteristic and low temperature discharge characteristic, it is effective to adjust a composition of an electrolyte.

The composition of the electrolyte has been studied energetically in industrial and academic communities. For example, in an example of the electrolyte of a lithium ion secondary battery, in order to achieve a high voltage of 4V class, an organic solvent having high stability in an expected potential range of a positive electrode and a negative electrode is used in place of conventionally used water.

In order to improve the discharge load characteristic, a preferable material as the organic solvent has polarity which can increase electric conductivity of the electrolyte. Moreover, in order to improve the low temperature discharge characteristic, preferably, a material has a low fusing point and does not increase viscosity of the electrolyte at a working temperature of the battery. However, the organic solvent as a single substance which satisfies all of these requirements has not been found. This is because the material with the polarity has a strong intermolecular interaction, and tends to have a high fusing point and high viscosity, so that it is theoretically difficult to lower the fusing point and the viscosity with keeping the polarity. Then a highly conductive solvent with high polarity and a low viscosity solvent with low polarity are mixed so that the solvents satisfy respectively the above requirements. However, a mixed composition thereof has mostly been optimized and it is not expected that the further optimization provides the further improvements in both of the properties.

Components which can improve both of the properties include a separator as well as the electrolyte. Improving battery characteristics by means of the separator requires not only possessions of excellent electrolyte permeability and excellent ionic permeability, but also functions of absorbing and retaining the electrolyte well. Then, surface modifications of the separator have been tried using a surfactant or a hydrophilic polymer. This is because it is thought that reducing the gap between polarities of the electrolyte and the separator is very effective, based on general facts that the polarity of the electrolyte is high, and the polarity of a separator material such as polyethylene, which is presently used for various batteries such as the lithium ion secondary battery, is low.

However, in fact, when the battery is made and evaluated as an experiment using the separator on which the surface modification is actually performed, there is few expected improvement in the discharge load characteristic and the low temperature discharge characteristic. Therefore, it is necessary to improve the discharge load characteristic and the low temperature discharge characteristic with other methods. In such a case, if a physical action can improve absorbency and retention of the electrolyte, it needs no worry about side reactions of chemical reactions and is very convenient.

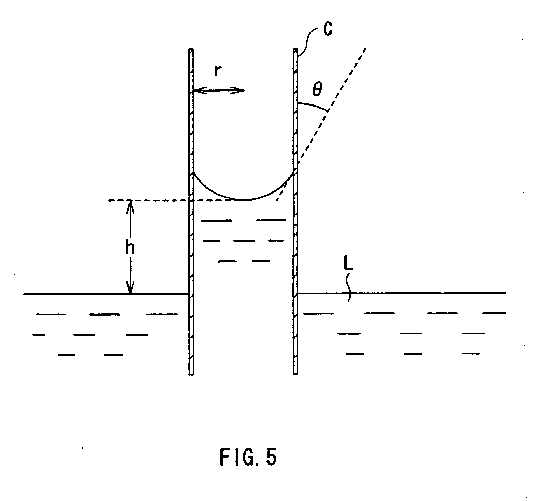

In addition, the inventor draws a fact, that liquid absorption in the separator is more affected by capillarity of a physical phenomenon than by a chemical action, from experiences. Fig. 5 is a view for explaining the capillarity phenomenon and shows a situation in which a capillary tube C is inserted into liquid L with a density p. A liquid level height h is determined by a capillary tube radius r, and the shorter the capillary tube radius r, the higher the liquid level height h, as expressed by Equation 1. Applying this to the separator, when macropores have a smaller pore size, the separator will be filled with the electrolyte leaving no space to a center part thereof. That is, it is thought that smaller macropores can improve the electrolyte permeability, the ionic permeability, and electrolyte retention of the separator and thus the discharge load characteristic and low temperature discharge characteristic of the battery can be improved. When actually evaluating real batteries, the smaller an average pore size is, the more excellent the discharge load characteristic and the low temperature discharge characteristic are obtained.

## (Equation 1)

$$h = \frac{2\gamma\cos\theta}{rg\rho}$$

(Where h expresses an increased height of a liquid level, r expresses a capillary tube radius, $\theta$ expresses a contact angle, $\gamma$ expresses a surface tension, g expresses a gravitational constant, and p expresses a liquid density.)

US-A-4190707 refers to a battery separator made of a porous film which has a porosity of 50 to 80%, an average pore diameter of 0.05 to 0.5 $\mu$m and an average ratio of the smaller dimension to the larger dimension of the pore opening of not more than 0.5, and take the reciprocal of the value 2. Furtheron, it teaches a porous film with an average pore diameter of 0.08 $\mu$m and an average ratio of the small to the large dimension of the pores of 0.6.

US-A-5667911 refers to a microporous membrane separator, which is continuous and seamless. It teaches an average pore size between 50 to 5000 Angström (0.005 to 0.5 $\mu$m) with an elongated shape with a width from 50 to 5000 Angström and a length from 500 to 10000 Angström.

JP-A-2000268867 refers to a battery element having a separator consisting of a porous film. The porous film has a porosity (void rate) of 45% to 75% and a mean pore (void) diameter of 0.2 $\mu$m or less.

However, when the average pore size is too small, the battery characteristic has tended to get worse conversely. Investigating a reason thereof has revealed that air permeability thereof was decreased extremely. It is thought that it was resulted from clogging of the macropores.

The present invention has been achieved to solve the above problems. It is an object of the invention to provide a battery with an excellent discharge load characteristic and low temperature discharge characteristic.

## DISCLOSURE OF THE INVENTION

A battery according to the invention comprises a positive electrode and a negative electrode which are placed to face each other, and an electrolyte and a separator which are located therebetween, wherein the separator includes a macroporous film having an average pore size of 0.04 $\mu$m to 0.05 $\mu$m and an average ratio of a shortest internal diameter to a longest internal diameter in a pore not less than 0.7 nor more than 1.0.

According to the battery of the invention, the average pore size of the microporous film is 0.04 $\mu$m to 0.05 $\mu$m, and the average ratio of the shortest internal diameter to the longest internal diameter in the pore is not less than 0.7 nor more than 1.0 pore, so no clogging in the macropores occurs and the electrolyte permeability, the ionic permeability, and the electrolyte retention of the separator are improved.

## BRIEF DESCRIPTION OF THE DRAWINGS

Fig. 1 is a cross sectional view showing a structure of a secondary battery according to an embodiment of the invention.
Fig. 2 is an enlarged plane view of a part of a separator in the secondary battery shown in Fig. 1.
Fig. 3 is a characteristic view showing relations of a high load discharge capacity maintenance rate to an average pore size and an average pore size ratio of macropores according to Examples 1-9 of the invention.
Fig. 4 is a characteristic view showing relations of a low temperature discharge capacity maintenance rate to the average pore size and the average pore size ratio of the macropores according to Examples 1-9.
Fig. 5 is a cross sectional view for explaining capillarity phenomenon.

## BEST MODE FOR CARRYING OUT THE INVENTION

Embodiments of the present invention will be described in detail below with reference to accompanying drawings.

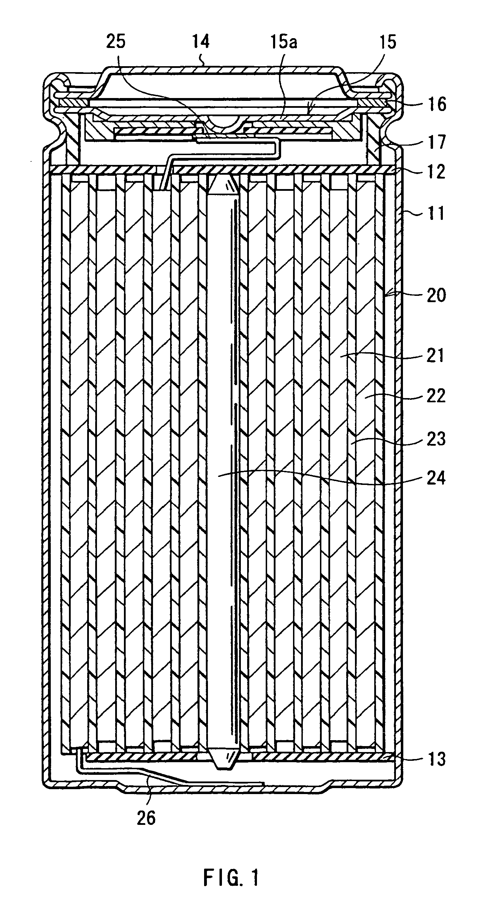

Fig. 1 shows a cross sectional structure of a secondary battery according to an embodiment of the invention. The secondary battery is a so-called cylinder type, and has a wound electrode 20, in which a strip-shaped positive electrode 21 and a strip-shaped negative electrode 22 are wound with a separator 23 therebetween, inside a hollow cylinder-like battery can 11. The battery can 11 is made, for example, of nickel (Ni) plated iron, and one end thereof is closed and the other end thereof is opened. Inside the battery can 11, a pair of insulating plates 12 and 13 is arranged perpendicular to a periphery surface of the winding to sandwich the wound electrode 20 therebetween.

A battery lid 14, and a safety valve mechanism 15 and a positive temperature coefficient (PTC) element 16 which are positioned on the inside of the battery lid 14, are caulked through a gasket 17 to be fixed to the open end of the battery can 11, and thus the inside of the battery can 11 is sealed. The battery lid 14 is made of the same material as one of the battery can 11, for example. The safety valve mechanism 15 is electrically connected to the battery lid 14 through the PTC element 16. When an internal pressure of the battery becomes more than certain value due to internal short circuit or heating from outside, a disk plate 15a is inverted to cut the electric connection between the battery lid 14 and the wound electrode 20. The PTC element 16 restricts electric currents, when its resistance increases with an increase in temperature, to prevent unusual heat generation due to high electric currents, and is made of barium titanate semiconductor ceramic, for example. The gasket 17 is made of an insulating material and to a surface thereof is applied asphalt, for example.

The wound electrode 20 is wound around a center pin 24, for example. A positive electrode lead 25 made of aluminum (Al) or the like is connected to the positive electrode 21 of the wound electrode 20, and a negative electrode lead 26 made of nickel or the like is connected to the negative electrode 22. The positive electrode lead 25 is welded to the safety valve mechanism 15 to be electrically connected with the battery lid 14, and the negative electrode lead 26 is welded and electrically connected with the battery can 11.

The positive electrode 21 has a structure, for example, where a positive electrode collector, which is not shown, has a pair of opposed surfaces and on both or either side thereof is located a positive electrode mixture layer, which is not shown. The positive electrode collector is composed of metallic foil such as aluminum foil, for example. The positive electrode mixture layer is composed to contain a positive electrode material, and if needed, a conductive agent such as carbon black or graphite and a binding agent such as polyvinylidene fluoride, for example. The positive electrode materials can preferably include metal oxides, metal sulfides, and certain high molecular materials, for example, and one or more kinds thereof are selected for any purpose of using the battery.

The metallic oxides can include lithium composite oxides and $V_2O_5$. Particularly, some lithium composite oxides are preferable, because they have a positive potential and can increase an energy density. Among the lithium composite oxides, there are ones expressed by a chemical formula of $Li_xMO_2$. In the formula, M expresses one or more kinds of transition metal elements, and preferably at least one kind selected from a group consisting of cobalt (Co), nickel (Ni), and manganese (Mn) in particular. A value of x depends on a charge and discharge state of the battery, and is usually $0.05 \leqq x \leqq 1.10$. Concrete examples of such a lithium composite oxides can include $LiCO_2$, $LiNiO_2$, $Li_yNi_z:Co_{1-z}O_2$ (where y and z depends on the charge and discharge state of the battery, and are usually $0<y<1$ and $0.7< z<1.02$), and $LiMn_2O_4$ with a spinel type structure.

The metal sulfides can include $TiS_2$ and $MoS_2$, and the high molecular materials can include polyaniline and polypyrrole. Moreover, $NbSe_2$ and the like can be used like these positive electrode materials.

The negative electrode 22 has a structure, for example, where a negative electrode collector, which is not shown, has a pair of opposed surfaces and on both or either side thereof is located a negative electrode mixture layer, which is not shown, as well as the positive electrode 21. The negative electrode collector is composed of metallic foil such as copper (Cu) foil, nickel foil, or stainless foil. The negative electrode mixture layer is composed to contain one or two kinds of negative electrode materials which lithium can be inserted into and extracted from, and may contain a binding agent such as polyvinylidene fluoride, if needed.

The negative electrode material, which lithium can be inserted into and extracted from, can include elementary substances, alloys, and compounds of metallic elements and metalloid elements, which can form an alloy with lithium, for example. Here, the alloys can include not only alloys made of two or more kinds of the metallic elements, but also alloys made of one or more kinds of the metallic elements and one or more kinds of the metalloid elements. Some of them have a structure of a solid solution, a eutectic substance (a eutectic mixture), an intermetallic compound, or coexistence of two or more thereof.

The metallic elements and the metalloid elements which can form an alloy with lithium can include magnesium (Mg), boron (B), arsenic (As), aluminum (Al), gallium (Ga), indium (In), silicon (Si), germanium (Ge), tin (Sn), lead (Pb), antimony (Sb), bismuth (Bi), cadmium (Cd), silver (Ag), zinc (Zn), hafnium (Hf), zirconium (Zr), and yttrium (Y), for example.

These alloys and compounds can include substances expressed by chemical formulas of $Ma_sMb_tLi_u$ and $Ma_p$-$Mc_qMd_r$, for example. In these chemical formulas, Ma expresses at least one kind of the metallic elements and the metalloid elements which can form an alloy with lithium, Mb expresses at least one kind of metallic elements and metalloid elements except for Ma and lithium, Mc expresses at least one kind of nonmetallic elements, and Md expresses at least one kind of metallic elements and metalloid elements except for Ma. Here, values of s, t, u, p, q, and r are $s> 0$, $t \geqq 0$, $u \geqq 0$, $p> 0$, $q> 0$, and $r \geqq 0$, respectively.

Particularly, elementary substances, alloys, and compounds of metallic elements and metalloid elements of Group 4B are preferable as the negative electrode material, and silicon, tin, and alloys and compounds thereof are preferable in particular, because they can provide a higher capacity. Also, alloys and compounds containing at least one kind selected from a first element group consisting of the metallic elements and the metalloid elements which can form an alloy with lithium, and at least one kind selected from a second element group consisting of metallic elements, metalloid elements and nonmetallic elements except for the elements of the first element group are preferable, because they can provide an excellent cycle characteristic. In addition, they may be a crystalline substance or amorphous.

Concrete examples of these alloys and compounds can include alloys and compounds, which are expressed by a chemical formula of $MiMh_j$ (where Mi expresses silicon or tin, Mh expresses one or more kinds of metallic elements, and j is $j \geqq 0$) such as $SiB_4$, $SiB_6$, $Mg_2Si$, $Mg_2Sn$, $Ni_2Si$, $TiSi_2$, $MoSi_2$, $CoSi_2$, $NiSi_2$, $CaSi_2$, $CrSi_2$, $Cu_5Si$, $FeSi_2$, $MnSi_2$, $NbSi_2$, $TaSi_2$, $VSi_2$, $WSi_2$ and $ZnSi_2$, and SiC, $Si_3N_4$, $Si_2N_2O$, $Ge_2N_2O$, $SiOv$ ($0<V\leqq2$), $SnO_w$ ($0<W\leqq2$), LiSiO, and LiSnO.

In addition, other alloys and compounds can include, for example, a LiAl alloy, LiAlMe alloys (where Me expresses at least one kind selected from a group consisting of Group 2A elements, Group 3B elements, Group 4B elements, and transition metal elements), an AlSb alloy, and a CuMgSb alloy.

The negative electrode material which lithium can be inserted into and extracted from can include carbon materials, metal composite oxides, and high molecular materials. The carbon materials can include less crystalline carbon materials obtained at a comparatively low temperature of 2000°C or below, and highly crystalline carbon materials obtained by processing a raw material, which is easy to be crystallized, at a high temperature of about 3000°C, and specifically, pyrolytic carbons, cokes, artificial graphite, natural graphite, glassy carbons, organic high molecular compound fired objects, carbon fibers, and activated carbon. Among them, the cokes include pitch coke, needle coke, and petroleum coke, and the organic high molecular compound fired objects includes objects obtained by firing and carbonizing a high molecular material such as a furan resin at a suitable temperature. Moreover, the metal composite oxides can include lithium titanate ($Li_{4/3}Ti_{5/3}O_4$), and the high molecular materials can include polyacethylene.

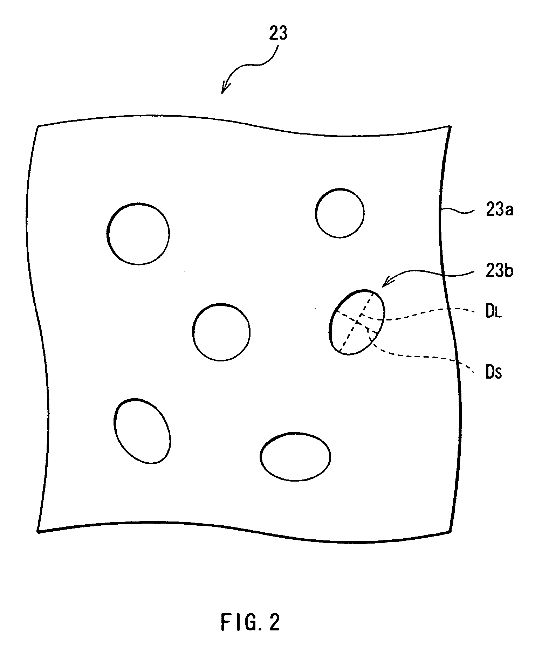

Fig. 2 is an enlarged view of a part of the separator 23 shown in Fig. 1. The separator 23 is composed to include a microporous film 23a having macropores 23b.

A ratio of a shortest diameter Ds to a longest diameter $D_L$ (a pore size ratio) of the macropore 23b is preferably close to 1, and, an average (an average pore size ratio) in the whole microporous film 23a is in a range not less than 0.7 nor more than 1.0. This is because when the above values are outside the ranges and a pore size thereof is smaller, clogging of the macropores 23b easily occurs and thereby electrolyte permeability of the separator 23 is decreased. The pore size ratio is preferably closer to 1. The electrolyte will be described later.

An average of the pore size (an average pore size) of the macropore 23b in the whole microporous film 23a is 0.04 $\mu$m to 0.05 $\mu$m. This is because capillarity phenomenon can improve the electrolyte permeability, ionic permeability, and electrolyte retention and thus improve a discharge load characteristic and a low temperature discharge characteristic. Here, the pore size of each of the macropores 23b is an average of a shortest internal diameter $D_S$ and a longest internal diameter $D_L$.

Porosity of the microporous film 23a is preferably not less than 30% nor more than 60%. This is because when it is less than 30%, the discharge load characteristic and the low temperature discharge characteristic cannot sufficiently be secured, and when it is higher than 60%, small short circuits between the electrodes occur and a yield thereof is decreased.

The microporous film 23a like this is obtained by using at least one kind selected from a group consisting of polyethylene, polypropylene, polyvinylidene fluoride, polyamidoimide, polyimide, polyacrylonitrile, and cellulose as a raw material.

The separator 23 is impregnated with a liquid electrolyte. The electrolyte is composed to contain a solvent and a lithium salt which is an electrolyte salt, for example. The solvent dissolves and dissociates the electrolyte salt. Conventional various nonaqueous solvents can be used as the solvent, and specifically can include cyclic carbonates such as propylene carbonate and ethylene carbonate, chain carbonates such as diethyl carbonate and dimethyl carbonate, carboxylate esters such as methyl propionate and methyl butyrate, $\gamma$-butyrolactone, sulfolane, 2-methyltetrahydrofuran, and ethers such as dimethoxyethane. Especially, it is preferable to use and mix a carbonate from the aspect of oxidation stability.

The lithium salts can include $LiBF_4$, $LiPF_6$, $LiAsF_6$, $LiClO_4$, $LiCF_3SO_3$, $LiN(CF_3SO_2)_2$, $LiN(C_2F_5SO2)_2$, $LiC(CF_3SO_2)_3$, and $LiAlCl_4$ and $LiSiF_6$, and one, two or more kinds thereof are used and mixed, for example.

In addition, a gel-like electrolyte may be used instead of the liquid electrolyte. The gel-like electrolyte has a structure where the liquid electrolyte, i.e., the solvent and the electrolyte salt are held in a high molecular compound. For example, polyvinylidene fluoride, polyacrylonitrile, cellulose, amide-imide, imido, and derivatives thereof can be used as the high molecular compound. The gel-like electrolyte can prevent a liquid leakage, so it is preferable.

The secondary battery can be manufactured as follows, for example.

First, for example, the positive electrode material which lithium can be inserted into and extracted from, the conductive agent, and the binding agent are mixed to prepare a positive electrode mixture, and the positive electrode mixture is dispersed in a solvent such as N-methyl-2-pyrolidone to provide paste-like positive electrode mixture slurry. The positive electrode mixture slurry is applied to the positive electrode collector, and is compressed and molded with a roller press machine or the like to form the positive electrode mixture layer after drying the solvent. This provides the positive electrode 21.

Next, for example, the negative electrode material which lithium can be inserted into and extracted from and the binding agent are mixed to prepare a negative electrode mixture, and the negative electrode mixture is dispersed in a solvent such as N-methyl-2-pyrolidone to provide paste-like negative electrode mixture slurry. The negative electrode mixture slurry is applied to the negative electrode collector, and is compressed and molded with a roller press machine or the like to form the negative electrode mixture layer after drying the solvent. This provides the negative electrode 22.

Then, the positive electrode lead 25 is fixed to the positive electrode collector with welding or the like, and the negative electrode lead 26 is fixed to the negative electrode collector with welding or the like. After that, the positive electrode 21 and the negative electrode 22 are wound with the separator 23 therebetween, a tip of the positive electrode lead 25 is welded to the safety valve mechanism 15, a tip of the negative electrode lead 26 is welded to the battery can 11, and the wound positive electrode 21 and negative electrode 22 are sandwiched between a pair of the insulating plates 12 and 13 and are housed inside the battery can 11. After housing the positive electrode 21 and the negative electrode 22 inside the battery can 11, the electrolyte is injected into the battery can 11 to impregnate the separator 23. Next, the battery lid 14, the safety valve mechanism 15, and the PTC element 16 are caulked and fixed to the open end of the battery can 11 through the gasket 17. Thereby, the secondary battery shown in Fig. 1 is formed.

In the secondary battery, during charging, lithium ions are extracted from the positive electrode 21, and are inserted into the negative electrode 22 via the electrolyte with which the separator 23 is impregnated, for example. During discharging, the lithium ions are extracted from the negative electrode 22, and are inserted into the positive electrode 21 via the electrolyte with which the separator 23 is impregnated, for example. Here, the separator 23 includes the microporous film 23a with the average pore size of 0.15 $\mu$m or less and the average pore size ratio not less than 0.4 nor more than 1.0, so the clogging of the macropores 23b does not occur, and the electrolyte permeability, the ionic permeability, and the electrolyte retention of the separator 23 are improved.

As described above, according to the embodiment, the separator 23 includes the microporous film 23a with the average pore size of 0.04 $\mu$m to 0.05 $\mu$m and the average pore size ratio not less than 0.7 nor more than 1.0, which can prevent the clogging of the macropores 23b, improve the electrolyte permeability and the electrolyte retention of the separator 23, and provide an excellent discharge load characteristic and low temperature discharge characteristic.

Particularly, when the porosity of the microporous film 23a is not less than 30% nor more than 60%, the load characteristic and the low temperature characteristic can sufficiently be secured, small short circuits between the electrodes can be inhibited, and decreasing a yield thereof can be prevented.

Furthermore, concrete examples of the invention will be described in detail.

The same cylinder type secondary batteries as the secondary battery shown in Figs. 1 and 2 were produced for Examples 1-9 as follows. Here, they will be described using the same symbols with reference to Figs 1 and 2.

First, lithium carbonate ($Li_2CO_3$) and nickel carbonate ($NiCO_3$) were mixed at a ratio of $Li_2CO_3$ : $NiCO_3$ = 0.5 : 1 (a mole ratio), and fired for about 5 hours at 900°C in the air to obtain lithium nickel composite oxide ($LiCoO_2$). Next, 91 parts by mass of the lithium nickel composite oxide as the positive electrode material, 6 parts by mass of graphite as the conductive agent, and 3 parts by mass of polyvinylidene fluoride as the binding agent were mixed to prepare the positive electrode mixture. Then, the positive electrode mixture was dispersed in N-methyl-2-pyrolidone as the solvent to obtain the positive electrode mixture slurry, it was uniformly applied to both sides of the positive electrode collector made of strip-shaped aluminum foil of 15 $\mu$m in thickness, dried, and then, compressed and molded to form the positive electrode mixture layer, in order to prepare the positive electrode 21. Then, the positive electrode lead 25 made of aluminum was fixed to one end of the positive electrode collector.

On the other hand, petroleum pitch was prepared for a starting material, was oxygen-crosslinked by introducing functional groups containing oxygen at a ratio of 10% to 20% to it, and was fired in an inert gas air current at 1000°C to obtain nongraphitizing carbon having a characteristic like glassy carbon. When an X-ray diffraction measurement was performed on the obtained nongraphitizing carbon, a (002) spacing thereof was 0.376 nm, and a true density thereof was 1.58 g/cm$^3$. Then, the above obtained nongraphitized carbon was ground to obtain powder with an average particle diameter of 50 $\mu$m, and 60 parts by mass of the above nongraphitized carbon, 35 weigh parts of a silicon compound ($Mg_2Si$) with an average particle diameter of 5 $\mu$m, and 5 parts by mass of polyvinylidene fluoride as the binding agent were mixed together to prepare the negative electrode mixture. Next, the negative electrode mixture was dispersed in N-methyl-2-pyrolidone as the solvent to obtain slurry, and then the slurry was uniformly applied to both sides of the negative electrode collector made of strip-shaped copper foil of 10 $\mu$m in thickness, dried, and compressed and molded to form the negative electrode mixture layer, in order to prepare the negative electrode 22. Then, the negative electrode lead 26 made of nickel was fixed to one end of the negative electrode collector.

Then, the separator 23 made of the microporous polypropylene film 23a with a thickness of about 20 $\mu$m and porosity of 50% was produced with a wet process. Here, an average pore size ratio and an average pore size of the macropores 23b were changed as shown in Table 1 in Examples 1-9.

After producing the positive electrode 21, the negative electrode 22, and the separator 23, the negative electrode 22, the separator 23, the positive electrode 21, and the separator 23 were laminated in this order to form a laminated object. The laminated object was wound many times to form a spiral shape, in order to prepare the wound electrode 20.

After producing the wound electrode 20, the wound electrode 20 was sandwiched between a pair of the insulating plates 12 and 13 and the negative electrode lead 26 was welded to the battery can 11, the positive electrode lead 25 was welded to the safety valve mechanism 15, and the wound electrode 20 was housed inside the battery can 11 made of nickel plated iron. After this, the electrolyte was injected into the battery can 11. The used electrolyte was obtained by dissolving $LiPF_6$ at a concentration of 1 mol/l in the solvent of a mixture of 50 volume % of propylene carbonate and 50 volume % of diethyl carbonate.

After injecting the electrolyte into the battery can 11, the battery lid 14 was fixed by caulking the battery can 11 through the gasket 17 which asphalt is applied on the surfaces thereof, so that the cylinder type secondary batteries of Examples 1-9 were obtained.

The discharge load characteristic and the low temperature discharge characteristic were evaluated in the obtained secondary batteries of Examples 1-9.

Here, a high load discharge capacity maintenance rate was obtained as the discharge load characteristic as follows. First, charge was performed at an electric current of 0.2C. Then discharge was performed at an electric current of 0.2C, and a reference discharge capacity was calculated. Next, the charge was performed again at the electric current of 0.2C, and then discharge was performed at an electric current of 3C. The high load discharge capacity was obtained, and a rate of the high load discharge capacity to the reference discharge capacity, that is, (the high load discharge capacity / the reference discharge capacity) x 100 was calculated as the high load discharge capacity maintenance rate. The above charge and discharge were performed in an environment of ambient temperature (23°C). Here, 1C means an electric current value at which a rated capacity is completely discharged in an hour, and 3C means a value of three times, i.e., an electric current value at which the rated capacity is completely discharged in 20 minutes. The rated capacity means a discharge capacity obtained at the first charge and discharge.

A low temperature discharge capacity maintenance rate was obtained as the low temperature discharge characteristic as follows. First, charge and discharge was performed at ambient temperature (23°C), and ambient temperature discharge capacity was calculated. Next, the charge was performed again at ambient temperature, and then discharge was performed in a -20°C environment. A low temperature discharge capacity was obtained, and a rate of the low temperature discharge capacity to the ambient temperature discharge capacity, that is, (the low temperature discharge capacity / the ambient temperature discharge capacity) $\times$ 100 was calculated as the low temperature discharge capacity maintenance rate. Here, when performing both of the above charge and discharge, the charge was performed at an electric current value of 0.2C, and the discharge was performed at an electric current value of 0.5C.

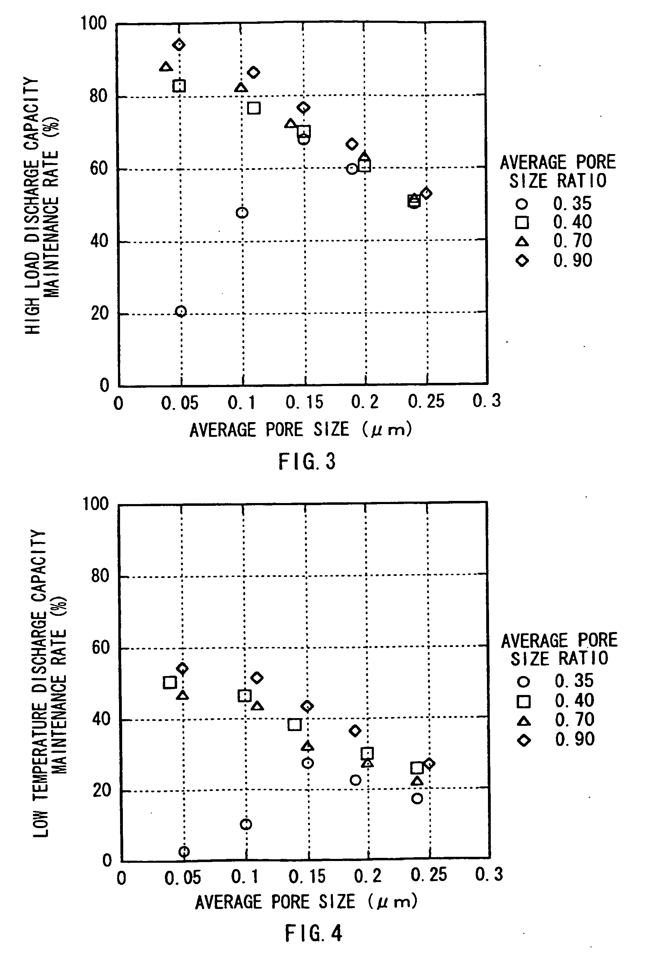

Obtained results are shown in Table 1. Moreover, shown in Fig. 3 are relations of the high load discharge capacity maintenance rate to the average pore size and the average pore size ratio of macropores 23 b, and shown in Fig. 4 are relations of the low temperature discharge capacity maintenance rate to the average pore size and the average pore size ratio of the macropores 23b.

Secondary batteries were produced in a similar way to Examples except for changing the average pore size and the average pore size ratio of the macropores as shown in Table 1, as Comparative Examples 1-11 of Examples. In the secondary batteries of Comparative Examples 1-11, the discharge load characteristic and the low temperature discharge characteristic were examined like Examples. Obtained results are shown in Table 1, Fig. 3, and Fig. 4.

In Comparative Examples 1-5, a microporous film including macropores with an average pore size ratio of less than 0.4 was used as the separator, and in Comparative Examples 4-11, a microporous film including macropores with an average pore size of more than 0.15 $\mu$m was used as the separator.

Figs. 3 and 4 have revealed that in the batteries using the microporous film including the macropores with the average pore size ratio not less than 0.7 nor more than 1.0 as the separator, both of the high load discharge capacity maintenance rate and the low temperature discharge capacity maintenance rate tended to increase with decreasing the average pore size. On the other hand, in the batteries using the microporous film including the macropores with the average pore size ratio less than 0.7 as the separator, both of the high load discharge capacity maintenance rate and the low temperature discharge capacity maintenance rate tended to increase with decreasing the average pore size, reach a local maximal value at 0.15 $\mu$m, and decrease from this. Moreover, Table 1 has revealed that the high load discharge capacity maintenance rate was as high as 70% or more and the low temperature discharge capacity maintenance rate was as high as 30% or more according to Examples.

Namely, it has been revealed that when the separator 23 including the microporous film 23a which has the average pore size of 0.04 $\mu$m to 0.05 $\mu$m the average of the ratio of the shortest internal diameter Ds to the longest internal diameter $D_L$ in the pore not less than 0.7 nor more than 1.0 or less is used, the excellent discharge load characteristic and low temperature discharge characteristic can be obtained.

Although the invention has been described by the foregoing embodiment and Examples, the invention is not limited to the embodiment and Examples but can be variously modified. For example, in the above embodiment and Examples, the concrete examples of the raw material constituting the separator 23 have been described, but other raw materials such as ceramics may be used, for example.

Moreover, one kind of the microporous film 23a constituting the separator 23 has been described in the above embodiment and Examples, but a laminated structure of two or more kinds of microporous films may also be used.

Furthermore, using the liquid electrolyte or the gel-like electrolyte which is one kind of a solid-like electrolyte has been described in the above embodiment and Examples, but other electrolytes may be used. Other electrolytes can include organic solid electrolytes in which an electrolyte salt is dispersed in a high molecular compound with ion conductivity, inorganic solid electrolytes consisting of ion conductive ceramics, ion conductive glass, ionic crystals, or the like, mixtures of the inorganic solid electrolyte and the liquid electrolyte, and mixtures of the inorganic solid electrolyte and the gel-like electrolyte or the organic solid electrolyte, for example.

In addition, the cylinder type secondary battery with the wound structure has been described in the above embodiment and Examples, but the invention is applicable to elliptic-type and polygon-type secondary batteries with the wound structure, and secondary batteries with a structure where the positive electrode and the negative electrode are folded or laminated. Also, the invention is applicable to secondary batteries with other shapes such as a coin type, a button type, or a card type. Moreover, the invention is applicable to not only the secondary batteries but also primary batteries.

Furthermore, the battery using lithium for an electrode reaction has been described in the above embodiment and Examples, but the invention is widely applicable to batteries with a separator. For example, the invention is also applicable to cases using other alkali metals such as sodium (Na) and potassium (K), alkaline earth metals such as magnesium (Mg) and calcium (Ca), other light metals such as aluminum, lithium, and alloys thereof for the electrode reaction, and the same effects can be obtained.

As described above, according to the battery of the invention, the separator includes the microporous film having the average pore size of 0.04 $\mu$m to 0.05 $\mu$m and the average ratio of the shortest internal diameter to the longest internal diameter in the pore not less than 0.7 nor more than 1.0, which can prevent the clogging of the macropores and improve the electrolyte permeability, the ionic permeability, and the electrolyte retention of the separator. Therefore, the excellent discharge load characteristic and low temperature discharge characteristic can be obtained.

Particularly, when the porosity of the microporous film is not less than 30% nor more than 60%, the load characteristic and the low temperature characteristic can sufficiently be secured, the small short circuits between the electrodes can be inhibited, and decreasing the yield thereof can be prevented.

Obviously many modifications and variations of the present invention are possible in the light of the above description. It is therefore to be understood that within the scope of the appended claims the invention may be practiced otherwise than as specifically described.

Table 1

| | Average pore size ratio | Average pore size ($\mu$m) | High load discharge capacity maintenance rate (%) | Low temperature discharge capacity maintenance rate (%) |
|---|---|---|---|---|
| Example 1 [*)] | 0.40 | 0.05 | 82.9 | 46.9 |
| Example 2 [*)] | 0.40 | 0.11 | 76.6 | 43.6 |
| Example 3 [*)] | 0.40 | 0.15 | 70.0 | 32.3 |
| Example 4 | 0.70 | 0.04 | 88.4 | 50.4 |
| Example 5 [*)] | 0.70 | 0.10 | 82.4 | 46.4 |
| Example 6 [*)] | 0.70 | 0.14 | 72.3 | 38.3 |
| Example 7 | 0.90 | 0.05 | 94.2 | 54.2 |
| Example 8 [*)] | 0.90 | 0.11 | 86.4 | 51.4 |
| Example 9 [*)] | 0.90 | 0.15 | 76.5 | 43.5 |
| Comparative Example 1 | 0.35 | 0.05 | 20.7 | 2.7 |
| Comparative Example 2 | 0.35 | 0.10 | 47.8 | 10.0 |
| Comparative Example 3 | 0.35 | 0.15 | 67.8 | 27.4 |
| Comparative Example 4 | 0.35 | 0.19 | 59.5 | 22.5 |

(continued)

|  | Average pore size ratio | Average pore size (μm) | High load discharge capacity maintenance rate (%) | Low temperature discharge capacity maintenance rate (%) |
|---|---|---|---|---|
| Comparative Example 5 | 0.35 | 0.24 | 50.0 | 17.0 |
| Comparative Example 6 | 0.40 | 0.20 | 60.4 | 27.4 |
| Comparative Example 7 | 0.40 | 0.24 | 50.8 | 22.0 |
| Comparative Example 8 | 0.70 | 0.20 | 63.0 | 30.0 |
| Comparative Example 9 | 0.70 | 0.24 | 51.6 | 25.6 |
| Comparative Example 10 | 0.90 | 0.19 | 66.4 | 36.4 |
| Comparative Example 11 | 0.90 | 0.25 | 52.8 | 26.8 |
| *) Background art for understanding the invention | | | | |

**Claims**

1. A battery comprising a positive electrode and a negative electrode which are placed to face each other, and an electrolyte and a separator which are located therebetween, wherein the separator includes a macroporous film having an average pore size of 0.04 μm to 0.05 μm and an average ratio of a shortest internal diameter to a longest internal diameter in a pore not less than 0.7 nor more than 1.0.

2. A battery according to claim 1, wherein the microporous film has a porosity not less than 30% nor more than 60%.

3. A lithium ion secondary battery according to claim 1, wherein the microporous film is comprised of at least one raw material selected from a group consisting of polyethylene, polypropylene, polyvinylidene fluoride, polyamidoimide, polyimide, polyacrylonitrile, and cellulose.

4. A lithium ion secondary battery according to claim 1, wherein the positive electrode comprises a lithium composite oxide which is described as a chemical formula of $Li_xMO_2$; and
   M is at least one kind of transition metal element selected from the group consisting of cobalt (Co), nickel (Ni), and manganese (Mn).

5. A lithium ion secondary battery according to claim 1, wherein the negative electrode comprises a negative electrode material which lithium can be inserted into and extracted from, and
   the negative electrode material comprises at least one element selected from the group consisting of silicon (Si), magnesium (Mg), boron (B), arsenic (As), aluminum (Al), gallium (Ga), indium (In), germanium (Ge), tin (Sn), lead (Pb), antimony (Sb), bismuth (Bi), cadmium (Cd), silver (Ag), zinc (Zn), hafnium (Hf), zirconium (Zr), and yttrium (Y).

6. A lithium ion secondary battery according to claim 5, wherein the negative electrode material further comprises carbon material.

7. A lithium ion secondary battery according to claim 1, wherein the electrolyte comprises a non-aqueous solvent and an electrolyte salt.

8. A lithium ion secondary battery according to claim 1, wherein the electrolyte is a liquid electrolyte or a gel-like electrolyte having a structure where the liquid electrolyte are held in a high molecular weight compound.

9. A lithium ion secondary battery according to any one of claims 1 to 8. wherein the battery has a high load discharge capacity maintenance rate of 82.9% to 94.2%.

10. A lithium ion secondary battery according to any one of claims 1 to 8, wherein the battery has low temperature discharge capacity maintenance rate of 46.9% to 54.2%.

**Patentansprüche**

1. Batterie, die eine positive Elektrode und eine negative Elektrode umfasst, die so platziert sind, dass sie einander zugewandt sind, und einen Elektrolyt und einen Separator, die sich dazwischen befinden, wobei der Separator einen makroporösen Film mit einer mittleren Porengröße von 0,04 μm bis 0,05 μm und einem mittleren Verhältnis eines kürzesten Innendurchmessers zu einem längsten Innendurchmesser in einer Pore von mindestens 0,7 und höchstens 1,0 enthält.

2. Batterie nach Anspruch 1, wobei der mikroporöse Film eine Porosität von mindestens 30% und höchstens 60% aufweist.

3. Lithium-Ion-Akkumulator nach Anspruch 1, wobei der mikroporöse Film aus mindestens einem Rohmaterial besteht, ausgewählt aus einer Gruppe bestehend aus Polyethylen, Polypropylen, Polyvinylidenfluorid, Polyamidoimid, Polyimid, Polyacrylnitril und Cellulose.

4. Lithium-Ion-Akkumulator nach Anspruch 1, wobei die positive Elektrode ein Lithiumverbundoxid umfasst, das als eine chemische Formel von $Li_xMO_2$ beschrieben ist; und
M mindestens eine Art von Übergangsmetallelement ist, ausgewählt aus der Gruppe bestehend aus Kobalt (Co), Nickel (Ni) und Mangan (Mn).

5. Lithium-Ion-Akkumulator nach Anspruch 1, wobei die negative Elektrode ein negatives Elektrodenmaterial umfasst, in das Lithium eingefügt und daraus extrahiert werden kann, und das negative Elektrodenmaterial mindestens ein Element umfasst, das ausgewählt ist aus der Gruppe bestehend aus Silizium (Si), Magnesium (Mg), Bor (B), Arsen (As), Aluminium (Al), Gallium (Ga), Indium (In), Germanium (Ge), Zinn (Sn), Blei (Pb), Antimon (Sb), Wismut (Bi), Cadmium (Cd), Silber (Ag), Zink (Zn), Hafnium (Hf), Zirkonium (Zr) und Yttrium (Y).

6. Lithium-Ion-Akkumulator nach Anspruch 5, wobei das negative Elektrodenmaterial weiterhin ein Kohlenstoffmaterial umfasst.

7. Lithium-Ion-Akkumulator nach Anspruch 1, wobei der Elektrolyt ein nicht wässriges Lösungsmittel und ein Elektrolytsalz umfasst.

8. Lithium-Ion-Akkumulator nach Anspruch 1, wobei der Elektrolyt ein flüssiger Elektrolyt oder ein gelartiger Elektrolyt mit einer Struktur ist, bei der der flüssige Elektrolyt in einer Verbindung mit hoher Molmasse gehalten wird.

9. Lithium-Ion-Akkumulator nach einem der Ansprüche 1 bis 8, wobei die Batterie eine Hochlast-Entladekapazitätserhaltungsrate von 82,9% bis 94,2% aufweist.

10. Lithium-Ion-Akkumulator nach einem der Ansprüche 1 bis 8, wobei die Batterie eine Niedertemperatur-Entladekapazitätserhaltungsrate von 46,9% bis 54,2% aufweist.

**Revendications**

1. Batterie comprenant une électrode positive et une électrode négative qui sont placées pour se faire face, et un électrolyte et un séparateur qui sont situés entre celles-ci, le séparateur comportant un film macroporeux ayant une taille moyenne de pores de 0,04 μm à 0,05 μm et un rapport moyen entre le plus petit diamètre interne et le plus grand diamètre interne dans un pore supérieur ou égal à 0,7 et inférieur ou égal à 1,0.

**2.** Batterie selon la revendication 1, dans laquelle le film microporeux a une porosité supérieure ou égale à 30 % et inférieure ou égale à 60 %.

**3.** Batterie lithium-ion rechargeable selon la revendication 1, dans laquelle le film microporeux est composé d'au moins une matière première choisie dans un groupe constitué par le polyéthylène, le polypropylène, le polyfluorure de vinylidène, le polyamidoimide, le polyimide, le polyacrylonitrile et la cellulose.

**4.** Batterie lithium-ion rechargeable selon la revendication 1, dans laquelle l'électrode positive comprend un oxyde composite de lithium qui est décrit par la formule chimique $Li_xMO_2$ ; et

M représente au moins un type d'élément métallique de transition choisi dans le groupe constitué par le cobalt (Co), le nickel (Ni) et le manganèse (Mn).

**5.** Batterie lithium-ion rechargeable selon la revendication 1, dans laquelle l'électrode négative comprend un matériau d'électrode négative dans lequel du lithium peut être inséré et duquel du lithium peut être extrait, et

le matériau d'électrode négative comprend au moins un élément choisi dans le groupe constitué par le silicium (Si), le magnésium (Mg), le bore (B), l'arsenic (As), l'aluminium (Al), le gallium (Ga), l'indium (In), le germanium (Ge), l'étain (Sn), le plomb (Pb), l'antimoine (Sb), le bismuth (Bi), le cadmium (Cd), l'argent (Ag), le zinc (Zn), le hafnium (Hf), le zirconium (Zr) et l'yttrium (Y).

**6.** Batterie lithium-ion rechargeable selon la revendication 5, dans laquelle le matériau d'électrode négative comprend en outre une matière carbonée.

**7.** Batterie lithium-ion rechargeable selon la revendication 1, dans laquelle l'électrolyte comprend un solvant non aqueux et un sel électrolytique.

**8.** Batterie lithium-ion rechargeable selon la revendication 1, dans laquelle l'électrolyte est un électrolyte liquide ou un électrolyte de type gel ayant une structure où l'électrolyte liquide est maintenu dans un composé de haut poids moléculaire.

**9.** Batterie lithium-ion rechargeable selon l'une quelconque des revendications 1 à 8, la batterie ayant un taux de maintien de la capacité de décharge à forte intensité de 82,9 % à 94,2 %.

**10.** Batterie lithium-ion rechargeable selon l'une quelconque des revendications 1 à 8, la batterie ayant un taux de maintien de la capacité de décharge à basse température de 46,9 % à 54,2 %.

FIG. 1

23

23a

23b

DL

Ds

FIG. 2

FIG. 3

FIG. 4

FIG. 5

**EP 1 420 469 B1**

**REFERENCES CITED IN THE DESCRIPTION**

**Patent documents cited in the description**

- US 4190707 A
- US 5667911 A
- JP 2000268867 A